**Europäisches Patentamt**

**European Patent Office**

**Office européen des brevets**

(11) Veröffentlichungsnummer: **0 281 831**
**B1**

(12) **EUROPÄISCHE PATENTSCHRIFT**

(45) Veröffentlichungstag der Patentschrift:
19.09.90

(51) Int. Cl.⁵: **G01N 30/46**

(21) Anmeldenummer: 88102588.6

(22) Anmeldetag: 22.02.88

(54) Verzweigungsstück für die Gasdurchflussumschaltung zwischen zwei gaschromatographischen Kapillarsäulen.

(30) Priorität: 09.03.87 DE 3707488

(43) Veröffentlichungstag der Anmeldung:
14.09.88 Patentblatt 88/37

(45) Bekanntmachung des Hinweises auf die Patenterteilung:
19.09.90 Patentblatt 90/38

(84) Benannte Vertragsstaaten:
DE FR GB

(56) Entgegenhaltungen:
EP-A- 0 003 617
DE-A- 2 840 612
DE-B- 2 655 387
FR-A- 2 491 215
GB-A- 2 097 694

(73) Patentinhaber: Siemens Aktiengesellschaft,
Wittelsbacherplatz 2, D-8000 München 2(DE)

(72) Erfinder: Straub, Horst, Dipl.-Ing. (FH),
Blücherstrasse 34, D-7500 Karlsruhe(DE)
Erfinder: Müller, Friedhelm, Dipl.-Ing. (FH),
Bahnhofstrasse 90, D-7515 Linkenheim(DE)

## Beschreibung

Die Erfindung bezieht sich auf ein Verzweigungsstück für die Gasdurchflußumschaltung zwischen zwei gaschromatographischen Kapillarsäulen, bestehend aus zwei koaxial zusammengefügten Teilstücken, einer in koaxialen Bohrungen in den Teilstücken angeordneten Verbindungskapillare, die mit ihren Enden in enger Passung, einen Ringspalt bildend, in die Enden der Kapillarsäulen einführbar ist, einer die Verbindungskapillare umfassende, in Ausnehmungen der Stirnflächen der zwei Teilstücke angeordneten hochtemperaturfesten Dichtung, von der Peripherie der Teilstücke ausgehende, in die koaxialen Bohrungen mündende Anschlüsse für Zu- und Ableitung von Steuer-und Spülgas für die Gasdurchflußumschaltung.

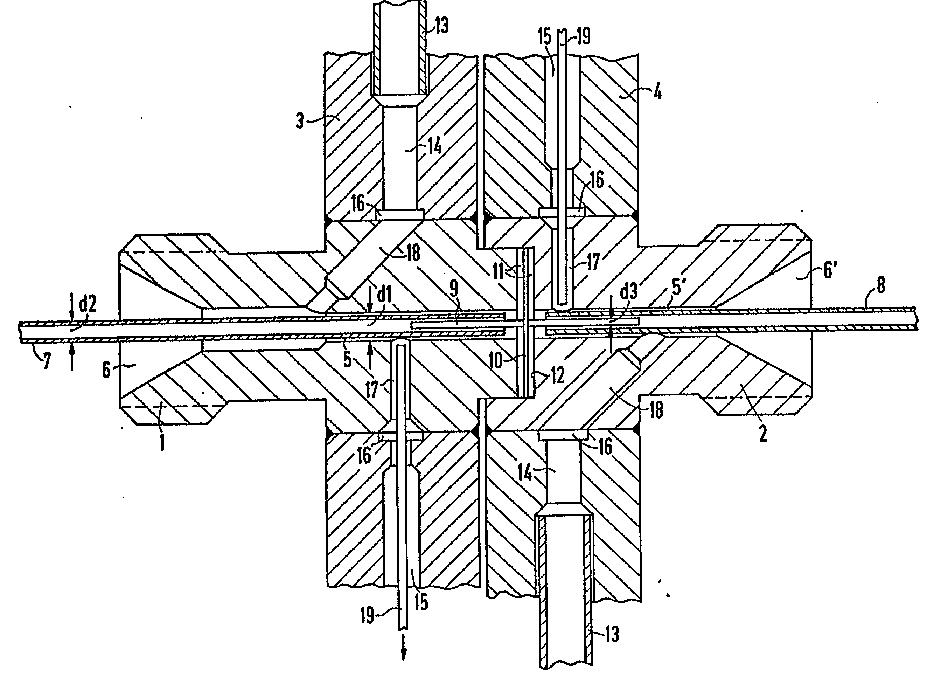

Ein derartiges Verzweigungsstück ist z. B. aus der DE-PS 26 55 387, Figur 3 bekannt.

Die Verbindungskapillare ragt bei der bekannten Ausführung an beiden Seiten aus dem Verzweigungsstück heraus, um das Aufschieben der Enden der Kapillartrennsäulen von Hand zu ermöglichen. Das bedarf jedoch einer gewissen Geschicklichkeit und Handfertigkeit, um Beschädigungen zu vermeiden. Infolge ihrer relativ großen Länge weist die Verbindungskapillare einen großen Strömungswiderstand auf, daraus folgend eine relativ lange Verweilzeit der Probe in der Kapillare, was die Trennfunktionen in der folgenden Kapillarsäule beeinträchtigt.

Als Abdichtung der Verbindungskapillare ist in der Mitte des Verzweigungsstücks eine walzenförmige Dichtung aus Graphit vorgesehen, die durch Verschrauben der Teilstücke gegeneinander zusammengepreßt wird. Der Preßdruck ist jedoch materialbedingt begrenzt, so daß eine relativ große Dichtung notwendig ist. Graphit als Dichtungswerkstoff ist zwar ausreichend tempera turfest, es können jedoch Teile der Gasprobe daran adsorbieren sowie Luft und Sauerstoff durchdiffundieren.

Es besteht die Aufgabe, das bekannte Verzweigungsstück in folgenden Punkten zu verbessern:
- Verringerung oder Verhinderung von Adsorptionen an Dichtungen und in nicht bespülten Toträumen,
- Verringerung des Strömungswiderstands in der Verbindungskapillare,
- Vereinfachung der Montage.

Mit einem Verzweigungsstück, das die Merkmale des Anspruchs 1 aufweist, lassen sich diese Forderungen erfüllen.

Mit den vorzugsweise aus Metall bestehenden Dichtungsscheiben, die kaum adsorbieren, läßt sich ein erheblich höherer Anpreßdruck und damit eine bessere Dichtung erreichen zugleich mit einer erheblichen Verringerung des Bauvolumens. Durch entsprechende Führung der Steuer- und Spülgaszu- und -ableitungen sind unbespülte Toträume innerhalb des Verzweigungsstücks weitgehend vermieden.

Durch die Verkürzung der Verbindungskapillare auf etwa die Hälfte oder ein Drittel der bisher üblichen Länge wird der Strömungswiderstand erheblich verringert und die Verweilzeit der Probe in der Verbindungskapillare verkürzt.

Das Einführen und Anschließen der Trennsäulenden an die Verbindungskapillare wird wesentlich erleichtert, da die in die Führungsbohrungen eingeführten Enden der Kapillarsäulen nicht ausweichen können und zwangsläufig auf die Verbindungskapillarenden aufgleiten.

Zur Erläuterung der Erfindung ist in der Figur ein Ausführungsbeispiel dargestellt und im folgenden beschrieben.

Das Verzweigungsstück setzt sich aus zwei im wesentlichen zylindrischen Teilstücken 1 und 2 zusammen, die mittels aufge schweißter ringscheibenförmiger Flansche 3 und 4 stirnseitig gegeneinander verspannbar sind.

Die Teilstücke 1 und 2 sind mit koaxialen Führungsbohrungen 5 und 5' versehen, welche in die trichterförmig ausgebildeten Enden 6 und 6' des Verteilungsstücks münden, welche letztere zur Aufnahme der hier nicht gezeigten Dichtungen für die von beiden Seiten eingeführten Kapillartrennsäulen 7 und 8 dienen. Die Kapillarsäulen 7 und 8 müssen auf die in den Führungsbohrungen 5 und 5' angeordnete Verbindungskapillare 9 aufgeschoben werden. Die Länge der Verbindungskapillare 9 beträgt etwa die Hälfte der Gesamtlänge der Führungsbohrungen 5, 5', deren Durchmesser d1 so gewählt ist, daß die Differenz der Durchmesser der Führungsbohrungen und der Außendurchmesser d2 der Kapillarsäulen 7 und 8 kleiner ist als der Außendurchmesser d3 der Verbindungskapillare 9. Das Aufschieben der Kapillaren 7 und 8, mit enger Passung, unter Bildung eines Ringspalts auf die Verbindungskapillare 9 wird so erheblich erleichtert, da die zu verbindenden Enden der Kapillaren nicht ausweichen können.

Zur Abdichtung ist die Verbindungskapillare 9 mittig in einer Scheibe 10 zentrisch befestigt, die aus einem annähernd nicht adsorbierenden Werkstoff hoher Dichte, beispielsweise aus Metall, vorzugsweise Silber, besteht. Beiderseits der Metallscheibe 10 können noch weitere Dichtscheiben 11 auf die Verbindungskapillare 9 aufgeschoben sein. Die aus der Scheibe 10 bzw. den Scheiben 10 und 11 bestehende Dichtung ist in einer von den Stirnflächen der Teilstücke 1 und 2 begrenzten zylindrischen Kammer 12 angeordnet, die in dem gezeigten Beispiel aus einer zylindrischen Ausnehmung in der Stirnfläche des Teilstücks 2 und einen in die Ausnehmung einschiebbaren zylindrischen Vorsprung der Stirnfläche des Teilstücks 1 gebildet ist. Auf die Dichtscheiben kann mittels der gegeneinander verspannbaren Teilstücke 1 und 2 ein erheblicher Druck ausgeübt werden, so daß die notwendige Dichtigkeit mit relativ kleinen Dichtscheiben erzielt werden kann.

Die Zuleitung für das die ventillose Durchflußumschaltung im Verzweigungsstück bewirkende Steuergas, welches zugleich als Spülgas dient, führt über Stutzen 13 durch radiale Bohrungen 14 in den Flanschen 3 und 4 auf die Teilstücke 1 und 2. Zur Aufnahme der Anschlüsse für die Ableitung des Steuer- und Spülgases dienen die den Bohrungen 14 gegenüberliegenden Bohrungen 15 in den Flanschen 3 und 4.

Durch in Radialebenen verlaufende Nuten in den inneren Mantelflächen der Flansche 3 und 4 und/oder in den äußeren Mantelflächen der Teilstücke 1 und 2 sind Ringkanäle 16 gebildet, in welche die Bohrungen 14 und 15 in den Flanschen 3 und 4 münden, die sich in weiteren Bohrungen 17 und 18 in den Teilstücken 1 und 2 fortsetzen.

Die Bohrungen 17 für die Ableitung des Steuer- und Spülgases in den Teilstücken 1 und 2 sind so ausgebildet, daß als Abströmdrosseln wirkende Kapillare 19 mit enger Passung in diese bis zur Mündung der Bohrungen 17 in die Führungsbohrung 5 bzw. 5' einschiebbar sind.

Die in den Teilstücken 1 und 2 von den Ringkanälen 16 ausgehenden Bohrungen 18 für die Zuleitung von Steuer- und Spülgas sind in einem spitzen Winkel zur Mittelachse des Verzweigungsstücks geführt und münden jeweils zwischen dessen Enden 6 und 6' und den den Bohrungen 17 zur Gasableitung zugeordneten Radialebenen in die Führungsbohrung 5 und 5'. Damit wird erreicht, daß alle Innenvolumina optimal bespült werden und keine Toträume vorhanden sind.

**Patentansprüche**

1. Verzweigungsstück für die Gasdurchflußumschaltung zwischen zwei gaschromatographischen Kapillarsäulen (7, 8), bestehend aus
- zwei koaxial zusammenfügbaren Teilstücken (1, 2),
- einer in koaxialen Führungsbohrungen (5, 5') in den Teilstücken angeordneten Verbindungskapillare (9), die mit ihren Enden in enger Passung, einen Ringspalt bildend, in die Enden der Kapillarsäulen einführbar ist,
- einer die Verbindungskapillare umfassende, in Ausnehmungen der Stirnflächen der zwei Teilstücke angeordneten hochtemperaturfesten Dichtung (10, 11),
- von der Peripherie der Teilstücke ausgehende, in die koaxialen Führungsbohrungen mündende Anschlüsse (13–19) für Zu- und Ableitung von Steuer- und Spülgas für die Gasdurchflußumschaltung, **dadurch gekennzeichnet, daß**
- die Innendurchmesser (d1) der Führungsbohrungen (5, 5') so gewählt sind, daß
d1 - d2 < d3,
wobei d1 gleich Innendurchmesser der Führungsbohrung (5, 5'), d2 Außendurchmesser der Trennsäulen (7, 8), d3 Außendurchmesser der Verbindungskapillaren (9) ist,
- die Verbindungskapillare (9) kürzer ist als die Gesamtlänge der Führungsbohrungen (5, 5') in den Teilstücken (1, 2),
- die Dichtung aus mindestens einer, in einer von den Stirnflächen der Teilstücke (1, 2) begrenzten zylindrischen Kammer (12) angeordneten Scheibe (10) aus einem annähernd nicht adsorbierenden Werkstoff hoher Dichte besteht, in der die Verbindungskapillare (9) konzentrisch befestigt ist.

2. Verzweigungsstück nach Anspruch 1, **dadurch gekennzeichnet, daß** die Teilstücke (1, 2) im wesentlichen zylindrische Formteile sind, die mittels aufgeschweißter, scheibenförmiger Flansche (3, 4) gegeneinander verspannbar sind.

3. Verzweigungsstück nach Anspruch 1 und 2, **dadurch gekennzeichnet, daß** die zylindrische Kammer (12) für die scheibenförmige Dichtung (10) aus einer zylindrischen Ausnehmung in der Stirnfläche des einen Teilstücks (2) und einem in die Ausnehmung einschiebbaren zylindrischen Vorsprung der Stirnfläche des anderen Teilstücks (1) gebildet ist.

4. Verzweigungsstück nach Anspruch 2, **dadurch gekennzeichnet, daß** Bohrungen (14, 15) für die Zu- und Ableitungen von Steuer- und Spülgas in radialer Richtung durch die Flansche (3, 4) geführt sind und in die entsprechenden Bohrungen (18, 17) in den Teilstücken (1, 2) münden.

5. Verzweigungsstück nach Anspruch 1, **dadurch gekennzeichnet, daß** die Verbindungskapillare (9) etwa halb so lang ist wie die Gesamtlänge der Führungsbohrungen (5, 5').

6. Verzweigungsstück nach Anspruch 2, **dadurch gekennzeichnet, daß** durch in Radialebene verlaufende Nuten in den inneren Mantelflächen der Flansche (3, 4) und/oder den äußeren Mantelflächen der Teilstücke (1, 2) Ringkanäle (16) gebildet sind, in welche je eine Zu- und Abflußbohrung (14, 15) für das Steuer- und Spülgas münden.

7. Verzweigungsstück nach Anspruch 6, **dadurch gekennzeichnet, daß** in den Teilstücken (1, 2) die von den Ringkanälen (16) ausgehenden Bohrungen (18) für die Zuleitung von Steuer- und Spülgas in einem spitzen Winkel zur Mittelachse des Verzweigungsstücks verlaufen und jeweils zwischen dessen Enden (6, 6') und den den Abflußbohrungen (15) zugeordneten Radialebenen in die Führungsbohrungen (5, 5') münden.

8. Verzweigungsstück nach Anspruch 1, **dadurch gekennzeichnet, daß** die Bohrungen (17) für die Ableitung des Druck- und Spülgases in den Teilstücken (1 und 2) so ausgebildet sind, daß je eine als Abströmdrossel wirkende Kapillare (19) mit enger Passung in diese einschiebbar ist.

9. Verzweigungsstück nach Anspruch 1, **dadurch gekennzeichnet, daß** die Scheibe (10) der Dichtung aus Metall besteht.

10. Verzweigungsstück nach einem der Ansprüche 1 oder 9, **dadurch gekennzeichnet, daß** beiderseits der Scheibe (10) weitere Dichtscheiben (11) auf die Verbindungskapillare (9) aufgeschoben sind.

**Claims**

1. Branch piece for changing the flow of gas between two gas-chromatographic capillary columns (7, 8) comprising
  – two coaxially mating sections (1, 2),
  – a connecting capillary (9), arranged in coaxial guide bores (5, 5') in the sections, which can be inserted into the ends of the capillary columns with its ends tightly held and forming an annular gap,
  – a high temperature resistant seal (10, 11) incorporating the connecting capillary and arranged in a recess between the front faces of the two sections,
  – sockets (13–19) extending from the periphery of the sections and opening into the coaxial guide bores, for feeding and draining control gas and cleansing gas for changing the flow of gas, characterised in that
– the inner diameters (dl) of the guide bores (5, 5') are selected so that
d1–d2< 3,
where d1 is equal to the inner diameter of the guide bore (5, 5'), d2 the outer diameter of the separation columns (7, 8), d3 the outer diameter of the connecting capillary (9),
– the connecting capillary (9) is shorter than the total length of the guide bores (5, 5') in the sections (1, 2),
– the seal is composed of at least one disc (10) made of a substantially non-adsorbent, highdensity material in which the connecting capillary (9) is secured concentrically and which is arranged in a cylindrical chamber (12) bounded by the front faces of the sections (1, 2).

2. Branch piece according to claim 1, characterised in that the sections (1, 2) are substantially cylindrical moulded parts which can be braced with respect to each other by means of a welded disc-shaped flange (3, 4).

3. Branch piece according to claim 1 and 2, characterised in that the cylindrical chamber (12) for the disc-like seal (10) comprises a cylindrical recess in the front surface of the one section (2) and a cylindrical projection of the front surface of the other section (1), which projection can be inserted into the recess.

4. Branch piece according to claim 2, characterised in that bores (14, 15) for the feeding and draining of control gas and cleansing gas are disposed in the radial direction in the flange (3, 4) and open into the corresponding bores (18, 17) in the sections (1, 2).

5. Branch piece according to claim 1, characterised in that the connecting capillary (9) is approximately half the length of the total length of the guide bores (5, 5').

6. Branch. piece according to claim 2, characterised in that by means of grooves extending in the radial plane in the inner surfaces of the flange (3, 4) and/or the outer surfaces of the sections (1, 2) annular channels (16) are formed into which open respectively a feed and drain bore (14, 15) for the control gas and cleansing gas.

7. Branch piece according to claim 6, characterised in that in the sections (1, 2) the bores (18) for feeding control gas and cleansing gas and extending from the annular channels (16) extend at an acute angle to the centre axis of the branch piece and respectively open into the guide bores (5, 5') between its ends (6, 6') and the radial planes associated with the drain bores (15).

8. Branch piece according to claim 1, characterised in that the bores (17) for draining the compressed gas and the cleansing gas in the sections (1 and 2) are constructed so as to tightly receive a capillary tube (19) functioning as a drain choke.

9. Branch piece according to claim 1, characterised in that the disc (10) of the seal is made of metal.

10. Branch piece according to one of claims 1 or 9, characterised in that further sealing discs (11) are pushed onto the connecting capillary (9) on both sides of the disc (10).

## Revendications

1. Pièce d'embranchement pour la commutation du passage du gaz entre deux colonnes capillaires (7, 8) utilisées en chromatographie en phase gazeuse, constituée par
– deux pièces partielles (1, 2) pouvant être réunies coaxialement,
– un capillaire de liaison (9), disposé dans des perçages coaxiaux de guidage (5, 5') ménagés dans les pièces partielles pouvant être introduit par ses extrémités, selon un ajustement serré, dans les extrémités des colonnes capillaires, en formant une fente annulaire,
– une garniture d'étanchéité (10, 11) résistante aux températures élevées, qui entoure le capillaire de liaison et est disposé dans des évidements des faces frontales des deux pièces partielles,
– des raccords (13–19), qui partent de la périphérie des pièces partielles, débouchent dans les perçages coaxiaux de guidage et servent à amener et évacuer un gaz de commande et un gaz de lavage pour la commutation du flux traversant de gaz, caractérisée par le fait que
– les diamètres intérieurs (d1) des perçages de guidage (5, 5') sont choisis de manière que l'on ait
d1–d2< d3,
d1 désignant le diamètre intérieur du perçage de guidage (5, 5'), d2 le diamètre extérieur des colonnes de séparation (7, 8), d3 le diamètre extérieur du capillaire de liaison (9),
– le capillaire de liaison (9) est d'une longueur inférieure à la longueur totale des perçages de guidage (5, 5') ménagés dans les pièces partielles (1, 2),
– la garniture d'étanchéité est constituée par au moins une rondelle (10), qui est disposée dans une chambre cylindrique (12) limitée par les faces frontales des pièces partielles (1, 2) et est réalisée en un matériau pratiquement non absorbant, qui possède une densité élevée et dans lequel le capillaire de liaison (9) est fixé concentriquement.

2. Pièce d'embranchement suivant la revendication 1, caractérisée par le fait que les pièces partielles (1, 2) sont des pièces de forme sensiblement cylindriques, qui sont serrées l'une contre l'autre à l'aide de brides soudées, en forme de disques (3, 4).

3. Pièce d'embranchement suivant les revendications 1 et 2, caractérisée par le fait que la chambre cylindrique (12) pour la garniture d'étanchéité en forme de rondelle (10) est délimitée par un logement cylindrique ménagé dans la face frontale d'une première pièce partielle (2) et par une partie saillante cylindrique, pouvant être insérée dans ce logement et située sur la face frontale de l'autre pièce partielle (1).

4. Pièce d'embranchement suivant la revendication 2, caractérisée par le fait que des perçages (14, 15) pour les canalisations d'amenée et d'évacuation du gaz de commande et du gaz de lavage s'étendent radialement à travers les brides (3, 4) et débouchent dans les perçages correspondants (18, 17) ménagés dans les pièces partielles (1, 2).

5. Pièce d'embranchement suivant la revendication 1, caractérisée par le fait que le capillaire de liaison (9) possède une longueur égale approximativement à la moitié de la longueur totale des perçages de guidage (5, 5').

6. Pièce d'embranchement suivant la revendication 2, caractérisée par le fait que des gorges situées dans un plan radial et ménagées dans les surfaces enveloppes intérieures des brides (3, 4) et/ou dans les surfaces enveloppes extérieures des pièces partielles (1, 2) délimitent des canaux annulaires (16), dans lesquels débouchent respectivement un perçage d'amenée et un perçage d'évacuation (14, 15) pour le gaz de commande et le gaz de lavage.

7. Pièce d'embranchement suivant la revendication 6, caractérisée par le fait que les perçages (18), qui partent des canaux annulaires (16) et servent à amener le gaz de commande et le gaz de lavage, s'étendent dans les pièces partielles (1, 2) en faisant un angle aigu par rapport à l'axe médian de la pièce d'embranchement et débouchent dans les perçages de guidage (5, 5'), respectivement entre les extrémités (6, 6') de la pièce d'embranchement et les plans radiaux associés aux perçages d'évacuation (15).

8. Pièce d'embranchement suivant la revendication 1, caractérisée par le fait que les perçages (17) sont agencés pour l'évacuation du gaz sous pression et du gaz de lavage dans les pièces partielles (1 et 2) de sorte que respectivement un capillaire (19), agissant en tant qu'étranglement de l'écoulement sortant, peut être inséré d'une manière étroitement adaptée dans ces perçages.

9. Pièce d'embranchement suivant la revendication 1, caractérisée par le fait que la rondelle (10) de la garniture d'étanchéité est réalisée en un métal.

10. Pièce d'embranchement suivant l'une des revendications 1 ou 9, caractérisée par le fait que d'autres rondelles d'étanchéité (11) sont emmanchées des deux côtés de la rondelle (10), sur le capillaire de liaison (9).